# EUROPEAN PATENT SPECIFICATION

(11) **EP 3 841 135 B1**
(45) Date of publication and mention of the grant of the patent: **02.12.2026**
(21) Application number: 19852777.2
(22) Date of filing: 21.08.2019
(51) Int. Cl.: C08G 18/38, C08G 18/16, C08G 18/32, C08G 18/40, C08G 18/50, C08G 18/66, C08G 18/76, C08G 101/00, C08J 9/00, C08K 3/04, C08K 5/3492

(54) **POLYURETHANE FOAM AND METHODS OF FORMING THE SAME**
POLYURETHANSCHAUM UND VERFAHREN ZUR FORMUNG DAVON
MOUSSE DE POLYURÉTHANE ET SES PROCÉDÉS DE FORMATION

(30) Priority: 23.08.2018 CN 201810971318; 06.09.2018 US 201862727618 P
(43) Date of publication of application: 30.06.2021
(73) Proprietor: Saint-Gobain Performance Plastics Corporation, Solon, OH 44139 (US)
(72) Inventor: ZHOU, Jing, Shanghai, 200240 (CN); DONG, Yue, Shanghai, 201100 (CN); YU, Song, Shanghai, 201100 (CN)
(74) Representative: Zimmermann & Partner Patentanwälte mbB
(86) International application number: PCT/US2019/047383
(87) International publication number: WO 2020/041397

(56) References cited:
- WO-A1-2014/149711
- DE-A1- 10 302 198
- US-A- 5 173 515
- US-A1- 2002 020 827
- US-A1- 2007 293 596
- US-A1- 2009 136 440
- US-A1- 2013 203 936

## Description

### TECHNICAL FIELD

The present disclosure relates to a polyurethane foam and methods of forming the same, more particularly, the present disclosure related to a polyurethane foam having a superior flame retardancy rating and methods of forming the same.

### BACKGROUND ART

Polyurethane foams are widely used in applications of construction, transportation, and electronics. US 2007/293596 A1 relates to an agent and method for manufacturing a fire protection element on the basis of polyurethane foams from a polyol component and a diisocyanate component, the polyol component containing at least one phosphorus-containing polyol and wherein the polyol component and the diisocyanate component do not contain any borate. US 5173515 A and DE 10302198 A1 are also dealing with flame retardant polyurethane foams.

However, such polyurethanes foams often include specific characteristics that make them prone specific safety issues. For example, such polyurethane foams are generally prone to rapid fire growth due to their inherent chemical properties (i.e., the "-NH-COO- groups" of the polyurethane foam cause lower decomposition temperature than many other polymers) and physical properties (i.e., low density of the polyurethane causes severe dripping during combustion and porous structure promotes oxygen and heat transfer). Accordingly, polyurethane foams formulations with improved safety characteristics are desired.

### SUMMARY

According to a first aspect, a polyurethane foam comprises: a base polyol component; a phosphorous polyol component; and an expandable graphite, wherein the polyurethane foam has a V0 rating based on a UL94 flame retardancy test performed at a polyurethane foam thickness of 3.5 mm and a polyurethane foam density of 380 kg/m3 where in the polyurethane foam further comprises melamine cyanurate, wherein the content of the melamine cyanurate is at least 4.0wt.% and not greater than 13.0wt.% for a total weight of the polyurethane foam.

According to yet another aspect, a method of forming the above said polyurethane foam includes providing a raw material mixture and forming the raw material mixture into a polyurethane foam.

According to still another aspect, a battery compression pad includes the above said polyurethane foam.

### BRIEF DESCRIPTION OF THE DRAWINGS

Embodiments are illustrated by way of example and are not limited to the accompanying figures.

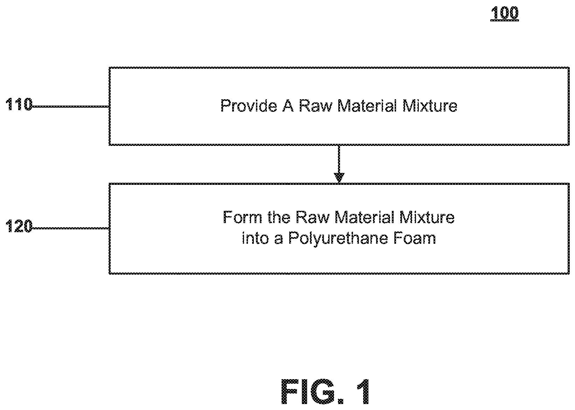

FIG. 1 includes a diagram showing a polyurethane foam forming method 100 according to embodiments described herein.

Skilled artisans appreciate that elements in the figures are illustrated for simplicity and clarity and have not necessarily been drawn to scale.

### DETAILED DESCRIPTION OF THE PREFERRED EMBODIMENT(S)

The following discussion will focus on specific implementations and embodiments of the teachings. The detailed description is provided to assist in describing certain embodiments and should not be interpreted as a limitation on the scope or applicability of the disclosure or teachings. It will be appreciated that other embodiments can be used based on the disclosure and teachings as provided herein.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Embodiments described herein are generally directed to a polyurethane foam and methods of forming the same, and more particularly, to a polyurethane foam having a superior flame retardancy rating and methods of forming the same.

For purposes of illustration, FIG. 1 includes a diagram showing a polyurethane foam forming method 100 according to particular embodiments described herein. The polyurethane forming method 100 may include a first step 110 of providing a raw material mixture and a second step 120 of forming the raw material mixture into a polyurethane foam.

Referring to the first step 110, according to certain embodiments, the raw material mixture may include a raw base polyol component, a raw phosphorous polyol component, and a raw expandable graphite component.

According to certain embodiments, the raw material mixture may include a particular content of raw base polyol component. For example, the raw material mixture may include a content of the raw base polyol component of at least 20 wt.% for a total weight of the raw material mixture, such as, at least 22 wt.% or at least 24 wt.% or at least 26 wt.% or at least 28 wt.% or at least 30 wt.% or at least 32 wt.% or at least 34 wt.% or at least 36 wt.% or at least 38 wt.% or even at least 40 wt.%. According to yet other embodiments, the raw material mixture may include a content of the raw base polyol component of not greater than 60 wt.% for a total weight of the raw material mixture, such as, not greater than 58 wt.% or not greater than 56 wt.% or not greater than 54 wt.% or not greater than 52 wt.% or not greater than 50 wt.% or not greater than 48 wt.% or not greater than 46 wt.% or not greater than 44 wt.% or not greater than 42 wt.% or not greater than 40 wt.% or not greater than 38 wt.% or even not greater than 36 wt.%. It will be appreciated that the content of the raw base polyol component in the raw material mixture may be within a range between any of the minimum and maximum values noted above. It will be further appreciated that the content of the raw base polyol component in the raw material mixture may be any value between any of the minimum and maximum values noted above.

According to still other embodiments, the raw base polyol component may have a particular APH color measurement as measured according to ASTM # D1209. For example, the raw base polyol component may have an APHA color measurement of not greater than 50.

According to yet other embodiments, the raw base polyol component may have a particular OH number. For example, the raw base polyol component may have an OH number of at least 52.0 KOH mg/g, such as, at least 52.1 KOH mg/g or at least 52.2 KOH mg/g or at least 52.3 KOH mg/g or at least 52.4 KOH mg/g or at least 52.5 KOH mg/g or at least 52.6 KOH mg/g or at least 52.7 KOH mg/g or at least 52.8 KOH mg/g or at least 52.9 KOH mg/g or at least 53.0 KOH mg/g or at least 53.1 KOH mg/g or at least 53.2 KOH mg/g or at least 53.3 KOH mg/g or at least 53.4 KOH mg/g or even at least 53.5 KOH mg/g. According to still other embodiments, the raw base polyol component may have an OH number of not greater than 56.0 KOH mg/g, such as, not greater than 55.9 KOH mg/g or not greater than 55.8 KOH mg/g or not greater than 55.7 KOH mg/g or not greater than 55.6 KOH mg/g or not greater than 55.4 KOH mg/g or not greater than 55.3 KOH mg/g or not greater than 55.2 KOH mg/g or not greater than 55.1 KOH mg/g or not greater than 55.0 KOH mg/g or not greater than 54.9 KOH mg/g or not greater than 54.8 KOH mg/g or not greater than 54.7 KOH mg/g or not greater than 54.6 KOH mg/g or even not greater than 54.5 KOH mg/g. It will be appreciated that the OH number of the raw base polyol component may be within a range between any of the minimum and maximum values noted above. It will be further appreciated that the OH number of the raw base polyol component may be any value between any of the minimum and maximum values noted above.

According to still other embodiments, the raw base polyol component may have a particular viscosity as measured according to ASTM # D4878. For example, the raw base polyol component may have a viscosity of at least 450 cps/25 °C, such as, at least 455 cps/25 °C or at least 460 cps/25 °C or at least 465 cps/25 °C or at least 470 cps/25 °C or at least 475 cps/25 °C or at least 80 cps/25 °C or at least 485 cps/25 °C or even at least 490 cps/25 °C. According to still other embodiments, the raw base polyol component may have a viscosity of not greater than 550 cps/25 °C, such as, not greater than 545 cps/25 °C or not greater than 540 cps/25 °C or not greater than about cps/25 °C or not greater than 530 cps/25 °C or not greater than 525 cps/25 °C or not greater than 520 cps/25 °C or not greater than 515 cps/25 °C or even not greater than 510 cps/25 °C. It will be appreciated that the viscosity of the raw base polyol component may be within a range between any of the minimum and maximum values noted above. It will be further appreciated that the viscosity of the raw base polyol component may be any value between any of the minimum and maximum values noted above.

According to yet other embodiments, the raw base polyol component may have a particular acid number. For example, the raw base polyol component may have an acid number of not greater than 0.1 KOH mg/g.

According to other embodiments, the raw base polyol component may have a particular water content. For example, the raw base polyol component may have a water content of not greater than 0.5%.

According to yet other embodiments, the raw base polyol component may have a particular pH. For example, the raw base polyol component may have a pH of at least 5.0, such as, at least 5.1 or at least 5.2 or at least 5.3 or at least 5.4 or at least 5.5 or at least 5.6 or at least 5.7 or at least 5.8 or at least 5.9 or even at least 6.0. According to still other embodiments, the raw base polyol component may have a pH of not greater than 8.0, such as, not greater than 7.9 or not greater than 7.8 or not greater than 7.7 or not greater than 7.6 or not greater than 7.5 or not greater than 7.4 or not greater than 7.3 or not greater than 7.2 or not greater than 7.1 or even not greater than 7.0. It will be appreciated that the pH of the raw base polyol component may be within a range between any of the minimum and maximum values noted above. It will be further appreciated that the pH of the raw base polyol component may be any value between any of the minimum and maximum values noted above.

According to still other embodiments, the raw base polyol component may include polyether polyols, polyester polyols, polymer polyols, bio-based polyols or combinations thereof.

According to certain embodiments, the raw material mixture may include a particular content of the raw phosphorous polyol component. For example, the raw material mixture may include a content of the raw phosphorous polyol component of at least 8 wt.% for a total weight of the raw material mixture, such as, at least 9 wt.% or at least 10 wt.% or at least 11 wt.% or at least 12 wt.% or at least 13 wt.% or even at least 14 wt.%. According to yet other embodiments, the raw material mixture may include a content of the raw phosphorous polyol component of not greater than 40 wt.% for a total weight of the raw material mixture, such as, not greater than 38 wt.% or not greater than 36 wt.% or not greater than 34 wt.% or not greater than 32 wt.% or not greater than 31 wt.% or not greater than 31 wt.% or not greater than 30 wt.% or not greater than 29 wt.% or not greater than 28 wt.% or not greater than 27 wt.% or not greater than 26 wt.% or not greater than 25 wt.% or not greater than 24 wt.% or not greater than 23 wt.% or not greater than 22 wt.% or not greater than 21 wt.% or not greater than 20 wt.% or not greater than 19 wt.% or even not greater than 18 wt.%. It will be appreciated that the content of the raw phosphorous polyol component in the raw material mixture may be within a range between any of the minimum and maximum values noted above. It will be further appreciated that the content of the raw phosphorous polyol component in the raw material mixture may be any value between any of the minimum and maximum values noted above.

According to yet other embodiments, the raw phosphorous polyol component may include a particular number of ethylene oxide (EO) terminals. For example, the raw phosphorous polyol component may include at least one EO terminal, such as, at least about two EO terminals or at least about three EO terminals or at least about four EO terminals.

According to other embodiments, the raw phosphorous polyol component may have a particular OH number. For example, the raw phosphorous polyol component may have an OH number of at least 80 KOH mg/g, such as, at least 85 KOH mg/g or at least 90 KOH mg/g or at least 95 KOH mg/g or at least 100 KOH mg/g or at least 105 KOH mg/g or at least 110 KOH mg/g or at least 115 KOH mg/g or at least 120 KOH mg/g or even at least 125 KOH mg/g. According to still other embodiments, the raw phosphorous polyol component may have an OH number of not greater than 180 KOH mg/g, such as, not greater than 175 KOH mg/g or not greater than 170 KOH mg/g or not greater than 165 KOH mg/g or not greater than 160 KOH mg/g or not greater than 155 KOH mg/g or not greater than 150 KOH mg/g or not greater than 145 KOH mg/g or not greater than 140 KOH mg/g or even not greater than 135 KOH mg/g. It will be appreciated that the OH number of the raw phosphorous polyol component may be within a range between any of the minimum and maximum values noted above. It will be further appreciated that the OH number of the raw phosphorous polyol component may be any value between any of the minimum and maximum values noted above.

According to other embodiments, the raw phosphorous polyol component may have a particular viscosity. For example, the raw phosphorous polyol component may have a viscosity of at least 1 Pa*s, such as, at least 1.1 Pa*s or at least 1.2 Pa*s or at least 1.3 Pa*s or at least 1.4 Pa*s or at least 1.5 Pa*s or at least 1.6 Pa*s or at least 1.7 Pa*s or at least 1.8 Pa*s or at least 1.9 Pa*s or even at least 2.0 Pa*s. According to yet other embodiments, the raw phosphorous polyol component may have a viscosity of at least 1 Pa*s, such as, at least 1.1 Pa*s or at least 1.2 Pa*s or at least 1.3 Pa*s or at least 1.4 Pa*s or at least 1.5 Pa*s or at least 1.6 Pa*s or at least 1.7 Pa*s or at least 1.8 Pa*s or at least 1.9 Pa*s or even at least 2.0 Pa*s. It will be appreciated that the viscosity of the raw phosphorous polyol component may be within a range between any of the minimum and maximum values noted above. It will be further appreciated that the viscosity of the raw phosphorous polyol component may be any value between any of the minimum and maximum values noted above.

According to other embodiments, the raw phosphorous polyol component may have a particular molecular mass. For example, the raw phosphorous polyol component may have a molecular mass of at least 700, such as, at least 710 or at least 720 or at least 730 or at least 740 or at least 750 or at least 760 or at least 770 or at least 780 or at least 790 or at least 800 or at least 810 or at least 820 or at least 830 or at least 840 or at least 850 or even at least 860. According to still other embodiments, the raw phosphorous polyol component may have a molecular mass of not greater than 920, such as, not greater than 910 or not greater than 900 or not greater than 890 or not greater than 880 or even not greater than 870. It will be appreciated that the molecular mass of the raw phosphorous polyol component may be within a range between any of the minimum and maximum values noted above. It will be further appreciated that the molecular mass of the raw phosphorous polyol component may be any value between any of the minimum and maximum values noted above.

According to yet other embodiments, the raw phosphorous polyol component may have a particular functionality. For example, the raw phosphorous polyol component may have a functionality of at least 1, such as, at least 2 or at least 3 or at least 4 or at least 5 or at least 6.

According to still other embodiments, the raw phosphorous polyol component may include phosphate types, phosphonate types, phosphinate types, phosphite types, phosphorous compounds having hydroxyl groups or combinations thereof.

According to certain embodiments, the raw material mixture may include a particular content of the raw expandable graphite component. For example, the raw material mixture may include a content of the raw expandable graphite component of at least 8 wt.% for a total weight of the raw material mixture, such as, at least 9 wt.% or at least 10 wt.% or at least 11 wt.% or at least 12 wt.% or at least 13 wt.% or even at least 14 wt.%. According to yet other embodiments, the raw material mixture may include a content of the raw expandable graphite component of not greater than about 40 wt.% for a total weight of the raw material mixture, such as, not greater thant 38 wt.% or not greater than 36 wt.% or not greater than 34 wt.% or not greater than 32 wt.% or not greater than 31 wt.% or not greater than 31 wt.% or not greater than 30 wt.% or not greater than 29 wt.% or not greater than 28 wt.% or not greater than 27 wt.% or not greater than 26 wt.% or not greater than 25 wt.% or not greater than 24 wt.% or not greater than 23 wt.% or not greater than 22 wt.% or not greater than 21 wt.% or not greater than 20 wt.% or not greater than 19 wt.% or even not greater than 18 wt.%. It will be appreciated that the content of the raw expandable graphite component in the raw material mixture may be within a range between any of the minimum and maximum values noted above. It will be further appreciated that the content of the raw expandable graphite component in the raw material mixture may be any value between any of the minimum and maximum values noted above.

The raw material mixture further includes a raw melamine component.

The raw material mixture includes a particular content of the raw melamine cyanurate.

The raw material mixture includes a content of the raw melamine cyanurate of at least 4.0 wt.% for a total weight of the raw material mixture, such as, at least 4.2 wt.% or at least 4.5 wt.% or at least 4.8 wt.% or at least 5.0 wt.% or at least 5.2 wt.% or at least 5.5 wt.% or at least 5.8 wt.% or at least 6.0 wt.% or at least 6.2 wt.% or at least 6.5 wt.% or at least 6.8 wt.% or at least 7.0 wt.% or at least 7.2 wt.% or at least 7.5 wt.% or at least 7.8 wt.% or at least 8.0 wt.% or at least 8.2 wt.% or even at least 8.5 wt.%. The raw material mixture includes a content of the raw melamine component of not greater than 13 wt.% for a total weight of the raw material mixture, such as, not greater than 12.8 wt.% or not greater than 12.5 wt.% or not greater than 12.2 wt.% or not greater than 12.0 wt.% or not greater than 11.8 wt.% or not greater than 11.5 wt.% or not greater than 11.2 wt.% or not greater than 11.0 wt.% or not greater than 10.8 wt.% or not greater than 10.5 wt.% or not greater than 10.2 wt.% or not greater than 10.0 wt.% or not greater than 9.8 wt.% or even not greater than 9.5 wt.%. It will be appreciated that the content of the raw melamine component in the raw material mixture may be within a range between any of the minimum and maximum values noted above. It will be further appreciated that the content of the raw melamine component in the raw material mixture may be any value between any of the minimum and maximum values noted above.

According to still other embodiments, the raw material mixture may further include a raw isocyanate component.

According to certain embodiments, the raw material mixture may include a particular content of the raw isocyanate component. For example, the raw material mixture may include a content of the raw isocyanate component of at least 1 wt.% for a total weight of the raw material mixture, such as, at least 1.5 wt.% or at least 2.0 wt.% or at least 2.5 wt.% or at least 3.0 wt.% or at least 3.5 wt.% or even at least 4.0 wt.%. According to yet other embodiments, the raw material mixture may include a content of the raw isocyanate component of not greater than 9.0 wt.% for a total weight of the raw material mixture, such as, not greater than 8.5 wt.% or not greater than 8.0 wt.% or not greater than 7.5 wt.% or not greater than 7.0 wt.% or not greater than 6.5 wt.% or not greater than 6.0 wt.% or not greater than 5.5 wt.% or even not greater than 5.0 wt.%. It will be appreciated that the content of the raw isocyanate component in the raw material mixture may be within a range between any of the minimum and maximum values noted above. It will be further appreciated that the content of raw isocyanate component in the raw material mixture may be any value between any of the minimum and maximum values noted above.

According to still other embodiments, the raw isocyanate component may include monomeric methylenediphenyl diisocyanate (MDI), modified MDI, polymeric MDI and combinations thereof.

According to still other embodiments, the raw material mixture may further include a raw surfactant component.

According to certain embodiments, the raw material mixture may include a particular content of the raw surfactant component. For example, the raw material mixture may include a content of the raw surfactant component of at least 1 wt.% for a total weight of the raw material mixture, such as, at least 1.5 wt.% or at least 2.0 wt.% or at least 2.5 wt.% or at least 3.0 wt.% or at least 3.5 wt.% or even at least 4.0 wt.%. According to yet other embodiments, the raw material mixture may include a content of the raw surfactant component of not greater than 9.0 wt.% for a total weight of the raw material mixture, such as, not greater than 8.5 wt.% or not greater than 8.0 wt.% or not greater than 7.5 wt.% or not greater than 7.0 wt.% or not greater than 6.5 wt.% or not greater than 6.0 wt.% or not greater than 5.5 wt.% or even not greater than 5.0 wt.%. It will be appreciated that the content of the raw surfactant component in the raw material mixture may be within a range between any of the minimum and maximum values noted above. It will be further appreciated that the content of raw surfactant component in the raw material mixture may be any value between any of the minimum and maximum values noted above.

According to still other embodiments, the raw surfactant component may include block copolymers of dimethysiloxane and polyether, which may have various forms, such as, linear, branched, or pendant.

According to still other embodiments, the raw material mixture may further include a raw catalyst component.

According to certain embodiments, the raw material mixture may include a particular content of the raw catalyst component. For example, the raw material mixture may include a content of the raw catalyst component of at least 0.1 wt.% for a total weight of the raw material mixture, such as, at least 0.25 wt.% or at least 0.5 wt.% or at least 0.75 wt.% or at least 1.0 wt.% or at least 1.25 wt.% or even at least 1.5 wt.%. According to yet other embodiments, the raw material mixture may include a content of the raw catalyst component of not greater than 5.0 wt.% for a total weight of the raw material mixture, such as, not greater than 4.75 wt.% or not greater than 4.5 wt.% or not greater than 4.25 wt.% or not greater than 4.0 wt.% or not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or even not greater than 2.0 wt.%. It will be appreciated that the content of the raw catalyst component in the raw material mixture may be within a range between any of the minimum and maximum values noted above. It will be further appreciated that the content of raw catalyst component in the raw material mixture may be any value between any of the minimum and maximum values noted above.

According to still other embodiments, the raw catalyst component may include metal catalysts containing metal component such as tin, cooper, lead, zinc, cobalt, or nickel, and amine catalysts such as tertiary amine or quaternary ammonium salt.

According to still other embodiments, the raw material mixture may further include a raw pigment component.

According to certain embodiments, the raw material mixture may include a particular content of the raw pigment component. For example, the raw material mixture may include a content of the raw pigment component of at least 0.1 wt.% for a total weight of the raw material mixture, such as, at least 0.25 wt.% or at least 0.5 wt.% or at least 0.75 wt.% or at least 1.0 wt.% or at least 1.25 wt.% or even at least 1.5 wt.%. According to yet other embodiments, the raw material mixture may include a content of the raw pigment component of not greater than 5.0 wt.% for a total weight of the raw material mixture, such as, not greater than 4.75 wt.% or not greater than 4.5 wt.% or not greater than 4.25 wt.% or not greater than 4.0 wt.% or not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or even not greater than 2.0 wt.%. It will be appreciated that the content of the raw pigment component in the raw material mixture may be within a range between any of the minimum and maximum values noted above. It will be further appreciated that the content of raw pigment component in the raw material mixture may be any value between any of the minimum and maximum values noted above.

According to still other embodiments, the raw pigment component may include carbon dispersions in polyols.

According to still other embodiments, the raw material mixture may further include a raw chain extender component.

According to certain embodiments, the raw material mixture may include a particular content of the raw chain extender component. For example, the raw material mixture may include a content of the raw chain extender component of at least 0.1 wt.% for a total weight of the raw material mixture, such as, at least 0.25 wt.% or at least 0.5 wt.% or at least 0.75 wt.% or at least 1.0 wt.% or at least 1.25 wt.% or even at least 1.5 wt.%. According to yet other embodiments, the raw material mixture may include a content of the raw chain extender component of not greater than 5.0 wt.% for a total weight of the raw material mixture, such as, not greater than 4.75 wt.% or not greater than 4.5 wt.% or not greater than 4.25 wt.% or not greater than 4.0 wt.% or not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or even not greater than 2.0 wt.%. It will be appreciated that the content of the raw chain extender component in the raw material mixture may be within a range between any of the minimum and maximum values noted above. It will be further appreciated that the content of raw chain extender component in the raw material mixture may be any value between any of the minimum and maximum values noted above.

According to still other embodiments, the raw chain extender component may include compounds with at least two isocyanate reactive groups such as diethylene glycol, triethylene glycol, dipropylene glycol, or tri propylene glycol.

According to still other embodiments, the raw material mixture may further include a raw thixotropic agent component.

According to certain embodiments, the raw material mixture may include a particular content of the raw thixotropic agent component. For example, the raw material mixture may include a content of the raw thixotropic agent component of at least 0.1 wt.% for a total weight of the raw material mixture or at least 0.25 wt.%, such as, at least 0.5 wt.% or even at least 0.75 wt.%. According to yet other embodiments, the raw material mixture may include a content of the raw thixotropic agent component of not greater than 4.0 wt.% for a total weight of the raw material mixture, such as, not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or not greater than 2.0 wt.% or not greater than 1.75 wt.% or not greater than 1.5 wt.% or not greater than 1.25 wt.% or even not greater than 1.0 wt.%. It will be appreciated that the content of the raw thixotropic agent component in the raw material mixture may be within a range between any of the minimum and maximum values noted above. It will be further appreciated that the content of raw thixotropic agent component in the raw material mixture may be any value between any of the minimum and maximum values noted above.

According to still other embodiments, the raw thixotropic agent component may include aerosol, bentonite, polyuria compounds or combinations thereof.

According to still other embodiments, providing the raw material mixture may include adding the raw phosphorous polyol component to the raw base polyol component to form a first mixture and stirring the first mixture to form a first homogeneous dispersion. According to still other embodiments, providing the raw material mixture may further include adding the raw expandable graphite component to the first homogeneous dispersion to form a second mixture and stirring the second mixture to form a second homogeneous dispersion. According to yet other embodiments, providing the raw material mixture may further include adding the raw isocyanate component to the second homogeneous dispersion to form a third homogeneous dispersion and stirring the third mixture to form the raw material mixture.

According to yet other embodiments, forming the raw material mixture into a polyurethane foam may include foaming the raw material mixture to form a foamed material mixture. According to still other embodiments, forming the raw material mixture into a polyurethane foam may further include curing the foamed material mixture to form the polyurethane foam.

Referring now to the polyurethane foam formed according to embodiments described herein, the polyurethane foam comprisis: a base polyol component; a phosphorous polyol component; and an expandable graphite, wherein the polyurethane foam has a V0 rating based on a UL94 flame retardancy test performed at a polyurethane foam thickness of 3.5 mm and a polyurethane foam density of 380 kg/m3 where in the polyurethane foam further comprises melamine cyanurate, wherein the content of the melamine cyanurate is at least 4.0wt.% and not greater than 13.0wt.% for a total weight of the polyurethane foam.

According to other embodiments, the polyurethane foam formed according to embodiments described herein may have a V0 rating based on a UL94 flame retardancy test performed at a polyurethane foam thickness of 3.0 mm and a polyurethane foam density of 380 kg/m³.

According to other embodiments, the polyurethane foam formed according to embodiments described herein may have a V0 rating based on a UL94 flame retardancy test performed at a polyurethane foam thickness of 2.5 mm and a polyurethane foam density of 380 kg/m³.

According to other embodiments, the polyurethane foam formed according to embodiments described herein may have a V0 rating based on a UL94 flame retardancy test performed at a polyurethane foam thickness of 2.0 mm and a polyurethane foam density of 380 kg/m³.

According to particular embodiments, the polyurethane foam formed according to embodiments described herein may have a V0 rating based on a UL94 flame retardancy test performed at a polyurethane foam thickness of 3.5 mm and a polyurethane foam density of 340 kg/m³.

According to other embodiments, the polyurethane foam formed according to embodiments described herein may have a V0 rating based on a UL94 flame retardancy test performed at a polyurethane foam thickness of 3.0 mm and a polyurethane foam density of 340 kg/m³.

According to other embodiments, the polyurethane foam formed according to embodiments described herein may have a V0 rating based on a UL94 flame retardancy test performed at a polyurethane foam thickness of 2.5 mm and a polyurethane foam density of 340 kg/m³.

According to other embodiments, the polyurethane foam formed according to embodiments described herein may have a V0 rating based on a UL94 flame retardancy test performed at a polyurethane foam thickness of 2.0 mm and a polyurethane foam density of 340 kg/m³.

According to particular embodiments, the polyurethane foam formed according to embodiments described herein may have a V0 rating based on a UL94 flame retardancy test performed at a polyurethane foam thickness of 3.5 mm and a polyurethane foam density of 300 kg/m³.

According to other embodiments, the polyurethane foam formed according to embodiments described herein may have a V0 rating based on a UL94 flame retardancy test performed at a polyurethane foam thickness of 3.0 mm and a polyurethane foam density of 300 kg/m³.

According to other embodiments, the polyurethane foam formed according to embodiments described herein may have a V0 rating based on a UL94 flame retardancy test performed at a polyurethane foam thickness of 2.5 mm and a polyurethane foam density of 300 kg/m³.

According to other embodiments, the polyurethane foam formed according to embodiments described herein may have a V0 rating based on a UL94 flame retardancy test performed at a polyurethane foam thickness of 2.0 mm and a polyurethane foam density of 300 kg/m³.

According to certain embodiments, the polyurethane foam may include a particular content of the base polyol component. For example, the polyurethane foam may include a content of the base polyol component of at least 20 wt.% for a total weight of the polyurethane foam, such as, at least 22 wt.% or at least 24 wt.% or at least 26 wt.% or at least 28 wt.% or at least 30 wt.% or at least 32 wt.% or at least 34 wt.% or at least 36 wt.% or at least 38 wt.% or even at least 40 wt.%. According to yet other embodiments, the polyurethane foam may include a content of the base polyol component of not greater than 60 wt.% for a total weight of the polyurethane foam, such as, not greater than 58 wt.% or not greater than 56 wt.% or not greater than 54 wt.% or not greater than 52 wt.% or not greater than 50 wt.% or not greater than 48 wt.% or not greater than 46 wt.% or not greater than 44 wt.% or not greater than 42 wt.% or not greater than 40 wt.% or not greater than 38 wt.% or even not greater than 36 wt.%. It will be appreciated that the content of the base polyol component in the polyurethane foam may be within a range between any of the minimum and maximum values noted above. It will be further appreciated that the content of the base polyol component in the polyurethane foam may be any value between any of the minimum and maximum values noted above.

According to still other embodiments, the base polyol component may have a particular APH color measurement as measured according to ASTM # D1209. For example, the base polyol component may have an APHA color measurement of not greater than 50.

According to yet other embodiments, the base polyol component may have a particular OH number. For example, the base polyol component may have an OH number of at least 52.0 KOH mg/g, such as, at least 52.1 KOH mg/g or at least 52.2 KOH mg/g or at least 52.3 KOH mg/g or at least 52.4 KOH mg/g or at least 52.5 KOH mg/g or at least 52.6 KOH mg/g or at least 52.7 KOH mg/g or at least 52.8 KOH mg/g or at least 52.9 KOH mg/g or at least 53.0 KOH mg/g or at least 53.1 KOH mg/g or at least 53.2 KOH mg/g or at least 53.3 KOH mg/g or at least 53.4 KOH mg/g or even at least 53.5 KOH mg/g According to still other embodiments, the base polyol component may have an OH number of not greater than 56.0 KOH mg/g, such as, not greater than 55.9 KOH mg/g or not greater than 55.8 KOH mg/g or not greater than 55.7 KOH mg/g or not greater than 55.6 KOH mg/g or not greater than 55.4 KOH mg/g or not greater than 55.3 KOH mg/g or not greater than 55.2 KOH mg/g or not greater than 55.1 KOH mg/g or not greater than 55.0 KOH mg/g or not greater than 54.9 KOH mg/g or not greater than 54.8 KOH mg/g or not greater than 54.7 KOH mg/g or not greater than 54.6 KOH mg/g or even not greater than 54.5 KOH mg/g. It will be appreciated that the OH number of the base polyol component may be within a range between any of the minimum and maximum values noted above. It will be further appreciated that the OH number of the base polyol component may be any value between any of the minimum and maximum values noted above.

According to still other embodiments, the base polyol component may have a particular viscosity as measured according to ASTM # D4878. For example, the base polyol component may have a viscosity of at least 450 cps/25 °C, such as, at least 455 cps/25 °C or at least 460 cps/25 °C or at least 465 cps/25 °C or at least 470 cps/25 °C or at least 475 cps/25 °C or at least 480 cps/25 °C or at least 485 cps/25 °C or even at least 490 cps/25 °C. According to still other embodiments, the base polyol component may have a viscosity of not greater than 550 cps/25 °C, such as, not greater than 545 cps/25 °C or not greater than 540 cps/25 °C or not greater than 535 cps/25 °C or not greater than 530 cps/25 °C or not greater than 525 cps/25 °C or not greater than 520 cps/25 °C or not greater than 515 cps/25 °C or even not greater than 510 cps/25 °C. It will be appreciated that the viscosity of the base polyol component may be within a range between any of the minimum and maximum values noted above. It will be further appreciated that the viscosity of the base polyol component may be any value between any of the minimum and maximum values noted above.

According to yet other embodiments, the base polyol component may have a particular acid number. For example, the base polyol component may have an acid number of not greater than 0.1 KOH mg/g.

According to other embodiments, the base polyol component may have a particular water content. For example, the base polyol component may have a water content of not greater than 0.5%.

According to yet other embodiments, the base polyol component may have a particular pH. For example, the base polyol component may have a pH of at least 5.0, such as, at least 5.1 or at least 5.2 or at least 5.3 or at least 5.4 or at least 5.5 or at least 5.6 or at least 5.7 or at least 5.8 or at least 5.9 or even at least 6.0. According to still other embodiments, the base polyol component may have a pH of not greater than 8.0, such as, not greater than 7.9 or not greater than 7.8 or not greater than 7.7 or not greater than 7.6 or not greater than 7.5 or not greater than 7.4 or not greater than 7.3 or not greater than 7.2 or not greater than 7.1 or even not greater than 7.0. It will be appreciated that the pH of the base polyol component may be within a range between any of the minimum and maximum values noted above. It will be further appreciated that the pH of the base polyol component may be any value between any of the minimum and maximum values noted above.

According to still other embodiments, the base polyol component may include polyether polyols, polyester polyols, polymer polyols, bio-based polyols or combinations thereof.

According to certain embodiments, the polyurethane foam may include a particular content of the phosphorous polyol component. For example, the polyurethane foam may include a content of the phosphorous polyol component of at least 8 wt.% for a total weight of the polyurethane foam, such as, at least 9 wt.% or at least 10 wt.% or at least about 11 wt.% or at least 12 wt.% or at least 13 wt.% or even at least 14 wt.%. According to yet other embodiments, the polyurethane foam may include a content of the phosphorous polyol component of not greater than 40 wt.% for a total weight of the polyurethane foam, such as, not greater than 38 wt.% or not greater than 36 wt.% or not greater than 34 wt.% or not greater than 32 wt.% or not greater than 31 wt.% or not greater than 31 wt.% or not greater than 30 wt.% or not greater than 29 wt.% or not greater than 28 wt.% or not greater than 27 wt.% or not greater than 26 wt.% or not greater than 25 wt.% or not greater than 24 wt.% or not greater than 23 wt.% or not greater than 22 wt.% or not greater than 21 wt.% or not greater than 20 wt.% or not greater than 19 wt.% or even not greater than 18 wt.%. It will be appreciated that the content of the phosphorous polyol component in the polyurethane foam may be within a range between any of the minimum and maximum values noted above. It will be further appreciated that the content of the phosphorous polyol component in the polyurethane foam may be any value between any of the minimum and maximum values noted above.

According to yet other embodiments, the phosphorous polyol component may include a particular number of ethylene oxide (EO) terminals. For example, the raw phosphorous polyol component may include at least one EO terminal, such as, at least about two EO terminals or at least about three EO terminals or at least about four EO terminals.

According to other embodiments, the phosphorous polyol component may have a particular OH number. For example, the phosphorous polyol component may have an OH number of at least 80 KOH mg/g, such as, at least 85 KOH mg/g or at least 90 KOH mg/g or at least 95 KOH mg/g or at least 100 KOH mg/g or at least 105 KOH mg/g or at least 110 KOH mg/g or at least 115 KOH mg/g or at least 120 KOH mg/g or even at least 125 KOH mg/g. According to still other embodiments, the phosphorous polyol component may have an OH number of not greater than 180 KOH mg/g, such as, not greater than 175 KOH mg/g or not greater than 170 KOH mg/g or not greater than 165 KOH mg/g or not greater than 160 KOH mg/g or not greater than 155 KOH mg/g or not greater than 150 KOH mg/g or not greater than 145 KOH mg/g or not greater than 140 KOH mg/g or even not greater than 135 KOH mg/g. It will be appreciated that the OH number of the phosphorous polyol component may be within a range between any of the minimum and maximum values noted above. It will be further appreciated that the OH number of the phosphorous polyol component may be any value between any of the minimum and maximum values noted above.

According to other embodiments, the phosphorous polyol component may have a particular viscosity. For example, the phosphorous polyol component may have a viscosity of at least 1 Pa*s, such as, at least 1.1 Pa*s or at least 1.2 Pa*s or at least 1.3 Pa*s or at least 1.4 Pa*s or at least 1.5 Pa*s or at least 1.6 Pa*s or at least 1.7 Pa*s or at least 1.8 Pa*s or at least 1.9 Pa*s or even at least 2.0 Pa*s. According to yet other embodiments, the phosphorous polyol component may have a viscosity of at least 1 Pa*s, such as, at least 1.1 Pa*s or at least 1.2 Pa*s or at least 1.3 Pa*s or at least 1.4 Pa*s or at least 1.5 Pa*s or at least 1.6 Pa*s or at least 1.7 Pa*s or at least 1.8 Pa*s or at least 1.9 Pa*s or even at least 2.0 Pa*s. It will be appreciated that the viscosity of the phosphorous polyol component may be within a range between any of the minimum and maximum values noted above. It will be further appreciated that the viscosity of the phosphorous polyol component may be any value between any of the minimum and maximum values noted above.

According to other embodiments, the phosphorous polyol component may have a particular molecular mass. For example, the phosphorous polyol component may have a molecular mass of at least 700, such as, at least 710 or at least 720 or at least 730 or at least 740 or at least 750 or at least 760 or at least 770 or at least 780 or at least 790 or at least 800 or at least 810 or at least 820 or at least 830 or at least 840 or at least 850 or even at least 860. According to still other embodiments, the phosphorous polyol component may have a molecular mass of not greater than 920, such as, not greater than 910 or not greater than 900 or not greater than 890 or not greater than 880 or even not greater than 870. It will be appreciated that the molecular mass of the phosphorous polyol component may be within a range between any of the minimum and maximum values noted above. It will be further appreciated that the molecular mass of the phosphorous polyol component may be any value between any of the minimum and maximum values noted above.

According to yet other embodiments, the phosphorous polyol component may have a particular functionality. For example, the raw phosphorous polyol component may have a functionality of at least 1, such as, at least 2 or at least 3 or at least 4 or at least 5 or at least 6.

According to still other embodiments, the phosphorous polyol component may include phosphate types, phosphonate types, phosphinate types, phosphite types, phosphorous compounds having hydroxyl groups or combinations thereof.

According to certain embodiments, the polyurethane foam may include a particular content of the expandable graphite. For example, the polyurethane foam may include a content of the expandable graphite of at least 8 wt.% for a total weight of the polyurethane foam, such as, at least 9 wt.% or at least 10 wt.% or at least 11 wt.% or at least 12 wt.% or at least 13 wt.% or even at least 14 wt.%. According to yet other embodiments, the polyurethane foam may include a content of the expandable graphite of not greater than 40 wt.% for a total weight of the polyurethane foam, such as, not greater than 38 wt.% or not greater than 36 wt.% or not greater than 34 wt.% or not greater than 32 wt.% or not greater than 31 wt.% or not greater than 31 wt.% or not greater than 30 wt.% or not greater than 29 wt.% or not greater than 28 wt.% or not greater than 27 wt.% or not greater than 26 wt.% or not greater than 25 wt.% or not greater than 24 wt.% or not greater than 23 wt.% or not greater than 22 wt.% or not greater than 21 wt.% or not greater than 20 wt.% or not greater than 19 wt.% or even not greater than 18 wt.%. It will be appreciated that the content of the expandable graphite in the polyurethane foam may be within a range between any of the minimum and maximum values noted above. It will be further appreciated that the content of the expandable graphite in the polyurethane foam may be any value between any of the minimum and maximum values noted above.

The polyurethane foam further includes melamine cyanurate.

The polyurethane foam includes a particular content of the melamine cyanurate. The polyurethane foam includes a content of the melamine cyanurate of at least 4.0 wt.% for a total weight of the polyurethane foam, such as, at least 4.2 wt.% or at least 4.5 wt.% or at least 4.8 wt.% or at least 5.0 wt.% or at least 5.2 wt.% or at least 5.5 wt.% or at least 5.8 wt.% or at least 6.0 wt.% or at least 6.2 wt.% or at least 6.5 wt.% or at least 6.8 wt.% or at least 7.0 wt.% or at least 7.2 wt.% or at least 7.5 wt.% or at least 7.8 wt.% or at least 8.0 wt.% or at least 8.2 wt.% or even at least 8.5 wt.%. The polyurethane foam may include a content of the melamine cyanurate of not greater than 13 wt.% for a total weight of the polyurethane foam, such as, not greater than 12.8 wt.% or not greater than 12.5 wt.% or not greater than 12.2 wt.% or not greater than 12.0 wt.% or not greater than 11.8 wt.% or not greater than 11.5 wt.% or not greater than 11.2 wt.% or not greater than 11.0 wt.% or not greater than 10.8 wt.% or not greater than 10.5 wt.% or not greater than 10.2 wt.% or not greater than 10.0 wt.% or not greater than 9.8 wt.% or even not greater than 9.5 wt.%. It will be appreciated that the content of the melamine cyanurate in the polyurethane foam may be within a range between any of the minimum and maximum values noted above. It will be further appreciated that the content of the melamine cyanurate in the polyurethane foam may be any value between any of the minimum and maximum values noted above.

According to still other embodiments, the polyurethane foam may further include an isocyanate.

According to certain embodiments, the polyurethane foam may include a particular content of the isocyanate. For example, the polyurethane foam may include a content of the isocyanate of at least 1 wt.% for a total weight of the polyurethane foam, such as, at least 1.5 wt.% or at least 2.0 wt.% or at least 2.5 wt.% or at least 3.0 wt.% or at least 3.5 wt.% or even at least 4.0 wt.%. According to yet other embodiments, the polyurethane foam may include a content of the isocyanate of not greater than 9.0 wt.% for a total weight of the polyurethane foam, such as, not greater than 8.5 wt.% or not greater than 8.0 wt.% or not greater than 7.5 wt.% or not greater than 7.0 wt.% or not greater than 6.5 wt.% or not greater than 6.0 wt.% or not greater than 5.5 wt.% or even not greater than 5.0 wt.%. It will be appreciated that the content of the isocyanate in the polyurethane foam may be within a range between any of the minimum and maximum values noted above. It will be further appreciated that the content of isocyanate in the polyurethane foam may be any value between any of the minimum and maximum values noted above.

According to still other embodiments, the isocyanate may include monomeric methylenediphenyl diisocyanate (MDI), modified MDI, polymeric MDI and combinations thereof.

According to still other embodiments, the polyurethane foam may further include a surfactant.

According to certain embodiments, the polyurethane foam may include a particular content of the surfactant. For example, the polyurethane foam may include a content of the surfactant of at least 1 wt.% for a total weight of the polyurethane foam, such as, at least 1.5 wt.% or at least 2.0 wt.% or at least 2.5 wt.% or at least 3.0 wt.% or at least 3.5 wt.% or even at least 4.0 wt.%. According to yet other embodiments, the polyurethane foam may include a content of the surfactant of not greater than 9.0 wt.% for a total weight of the polyurethane foam, such as, not greater than 8.5 wt.% or not greater than 8.0 wt.% or not greater than 7.5 wt.% or not greater than 7.0 wt.% or not greater than 6.5 wt.% or not greater than 6.0 wt.% or not greater than 5.5 wt.% or even not greater than 5.0 wt.%. It will be appreciated that the content of the surfactant in the polyurethane foam may be within a range between any of the minimum and maximum values noted above. It will be further appreciated that the content of surfactant in the polyurethane foam may be any value between any of the minimum and maximum values noted above.

According to still other embodiments, the surfactant may include block copolymers of dimethysiloxane and polyether, which may have various forms, such as, linear, branched, or pendant.

According to still other embodiments, the polyurethane foam may further include a catalyst.

According to certain embodiments, the polyurethane foam may include a particular content of the catalyst. For example, the polyurethane foam may include a content of the catalyst of at least 0.1 wt.% for a total weight of the polyurethane foam, such as, at least 0.25 wt.% or at least 0.5 wt.% or at least 0.75 wt.% or at least 1.0 wt.% or at least 1.25 wt.% or even at least 1.5 wt.%. According to yet other embodiments, the polyurethane foam may include a content of the catalyst of not greater than 5.0 wt.% for a total weight of the polyurethane foam, such as, not greater than 4.75 wt.% or not greater than 4.5 wt.% or not greater than 4.25 wt.% or not greater than 4.0 wt.% or not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or even not greater than 2.0 wt.%. It will be appreciated that the content of the catalyst in the polyurethane foam may be within a range between any of the minimum and maximum values noted above. It will be further appreciated that the content of catalyst in the polyurethane foam may be any value between any of the minimum and maximum values noted above.

According to still other embodiments, the catalyst may include metal catalysts containing metal component such as tin, cooper, lead, zinc, cobalt, or nickel, and amine catalysts such as tertiary amine or quaternary ammonium salt.

According to still other embodiments, the polyurethane foam may further include a pigment.

According to certain embodiments, the polyurethane foam may include a particular content of the pigment. For example, the polyurethane foam may include a content of the pigment of at least 0.1 wt.% for a total weight of the polyurethane foam, such as, at least 0.25 wt.% or at least 0.5 wt.% or at least 0.75 wt.% or at least 1.0 wt.% or at least 1.25 wt.% or even at least 1.5 wt.%. According to yet other embodiments, the polyurethane foam may include a content of the pigment of not greater than 5.0 wt.% for a total weight of the polyurethane foam, such as, not greater than 4.75 wt.% or not greater than 4.5 wt.% or not greater than 4.25 wt.% or not greater than 4.0 wt.% or not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or even not greater than 2.0 wt.%. It will be appreciated that the content of the pigment in the polyurethane foam may be within a range between any of the minimum and maximum values noted above. It will be further appreciated that the content of pigment in the polyurethane foam may be any value between any of the minimum and maximum values noted above.

According to still other embodiments, the pigment may include carbon dispersions in polyols.

According to still other embodiments, the polyurethane foam may further include a chain extender.

According to certain embodiments, the polyurethane foam may include a particular content of the chain extender. For example, the polyurethane foam may include a content of the chain extender of at least 0.1 wt.% for a total weight of the polyurethane foam, such as, at least 0.25 wt.% or at least 0.5 wt.% or at least 0.75 wt.% or at least 1.0 wt.% or at least 1.25 wt.% or even at least 1.5 wt.%. According to yet other embodiments, the polyurethane foam may include a content of the chain extender of not greater than 5.0 wt.% for a total weight of the polyurethane foam, such as, not greater than 4.75 wt.% or not greater than 4.5 wt.% or not greater than 4.25 wt.% or not greater than 4.0 wt.% or not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or even not greater than 2.0 wt.%. It will be appreciated that the content of the chain extender in the polyurethane foam may be within a range between any of the minimum and maximum values noted above. It will be further appreciated that the content of chain extender in the polyurethane foam may be any value between any of the minimum and maximum values noted above.

According to still other embodiments, the chain extender may include compounds with at least two isocyanate reactive groups such as diethylene glycol, triethylene glycol, dipropylene glycol, or tri propylene glycol.

According to still other embodiments, the polyurethane foam may further include a thixotropic agent.

According to certain embodiments, the polyurethane foam may include a particular content of the thixotropic agent. For example, the polyurethane foam may include a content of the thixotropic agent of at least 0.1 wt.% for a total weight of the polyurethane foam or at least 0.25 wt.%, such as, at least 0.5 wt.% or even at least 0.75 wt.%. According to yet other embodiments, the polyurethane foam may include a content of the thixotropic agent of not greater than 4.0 wt.% for a total weight of the polyurethane foam, such as, not greater than 3.75 wt.% or not greater than 3.5 wt.% or not greater than 3.25 wt.% or not greater than 3.0 wt.% or not greater than 2.75 wt.% or not greater than 2.5 wt.% or not greater than 2.25 wt.% or not greater than 2.0 wt.% or not greater than 1.75 wt.% or not greater than 1.5 wt.% or not greater than 1.25 wt.% or even not greater than 1.0 wt.%. It will be appreciated that the content of the thixotropic agent in the polyurethane foam may be within a range between any of the minimum and maximum values noted above. It will be further appreciated that the content of thixotropic agent in the polyurethane foam may be any value between any of the minimum and maximum values noted above.

According to still other embodiments, the thixotropic agent may include aerosol, bentonite, polyuria compounds or combinations thereof.

According to yet other embodiments, the polyurethane foam may have a particular thickness. For example, the polyurethane foam may have a thickness of at least 0.5 mm, such as, at least 0.55 mm or at least 0.6 mm or at least 0.65 mm or at least 0.7 mm or even at least 0.75 mm. According to still other embodiments, the polyurethane foam may have a thickness of not greater than 15 mm, such as, not greater than 14.5 mm or not greater than 14.0 mm or not greater than 13.5 mm or not greater than 13.0 mm or not greater than 12.5 mm or not greater than 12.0 mm or not greater than 11.5 mm or not greater than 11.0 mm or not greater than 10.5 mm or not greater than 10.0 mm or not greater than 9.5 mm or not greater than 9.0 mm or not greater than 8.5 mm or not greater than 8.0 mm or not greater than 7.5 mm or not greater than 7.0 mm or not greater than 6.5 mm or not greater than 6.0 mm or not greater than 5.5 mm or not greater than 5.0 mm or not greater than 4.5 mm or not greater than 4.0 mm or not greater than 3.5 mm or not greater than 3.0 mm or not greater than 2.5 mm or not greater than 2.0 mm or not greater than 1.5 mm or even not greater than 1.0 mm. It will be appreciated that the thickness of the polyurethane foam may be within a range between any of the minimum and maximum values noted above. It will be further appreciated that the thickness of the polyurethane foam may be any value between any of the minimum and maximum values noted above.

According to yet other embodiments, the polyurethane foam may have a particular compression force deflection (CFD) as measured according to ASTM # D3574 at a 20% compression ratio. For example, the polyurethane foam may have a CFD of at least 5 KPa as measured at 20% compression ratio.

According to yet other embodiments, the polyurethane foam may have a particular compression force deflection (CFD) as measured according to ASTM # D3574 at a 70% compression ratio. For example, the polyurethane foam may have a CFD of not greater than 005 KPa as measured at 20% compression ratio.

According to still other embodiments, the polyurethane foam may have a particular compression set (C-set) as measured according to ASTM # D3574 at 70 °C for 7 days. For example, the polyurethane foam may have a C-set of not greater than 10% or not greater than 9% or not greater than 8% or not greater than 7% or not greater than 6% or not greater than 5% or not greater than 4% or not greater than 3% or not greater than 2% or not greater than 1% or substantially no C-set. It will be appreciated that the C-set of the polyurethane foam may be within a range between any of the values noted above. It will be further appreciated that the C-set of the polyurethane foam may be any value between any of the values noted above.

Referring now to a particular use of the polyurethane foam formed according to embodiments described herein, a particular embodiment includes a battery compression pad that includes the polyurethane foam of the invention. It will be appreciated that the polyurethane foam of the battery compression pad may be formed according to any of the embodiments described herein.

Many different aspects and embodiments are possible. Some of those aspects and embodiments are described herein. After reading this specification, skilled artisans will appreciate that those aspects and embodiments are only illustrative and do not limit the scope of the present invention.

### EXAMPLES

The concepts described herein will be further described in the following Examples, which do not limit the scope of the invention described in the claims.

### EXAMPLE 1

Three sample polyurethane foams S1, S2 and S3 were formed according to embodiments described herein. The compositions of each sample polyurethane foam S1, S2 and S3 are summarized in Table 1 below.

**Table 1 - Sample Foam Composition**

| **Component** | **S1 (wt.% for a total weight of the sample)** | **S2 (wt.% for a total weight of the sample)** | **S3 (wt.% for a total weight of the sample)** |
|---|---|---|---|
| **Base polyol-1** | 37.79 | 40.97 | 43.69 |
| **Surfactant** | 3 | 5.15 | 5.49 |
| **Catalyst** | 2.04 | 1.78 | 1.89 |
| **Pigment** | 0.87 | 2.21 | 2.35 |
| **Chain extender** | 1.64 | 1.54 | 1.64 |
| **Thixotropic agent** | 1.42 | 0.82 | 0.81 |
| **Phosphorous polyol** | 15.11 | 12.29 | 13.11 |
| **Melamine Cyanurate** | 7.56 | 6.15 | - |
| **Expandable graphite** | 15.11 | 12.29 | 13.11 |
| **Isocyanate** | 15.45 | 16.80 | 17.91 |

Each of the sample polyurethane foams were formed by mixing all the liquid components (including the base polyol, surfactant, catalyst, pigment, chain extender, thixotropic agent, phosphorous polyol) until the liquid phase is homogeneous. Then, the fillers (including the melamine cyanurate, expandable graphite, zinc borate, phosphorous compound, phosphorous nitric compound) were added to the liquid mixture. The combined mixture was then mixed until it reached a homogeneous composition. Finally, the isocyanate was added to the combined mixture. The final mixture was cured in an over at 170 °C oven for several minutes.

Each of the sample polyurethane foams were tested to determine their UL94 fire retardancy rating at various polyurethane foam thicknesses and densities. The results of the tests are summarized in Table 2 below.

**Table 2 - UL94 Fire Retardancy Rating Test Results**

| **Foam Thickness (mm)** | **Foam Density (kg/m³)** | **S1** | **S2** | **S3** |
|---|---|---|---|---|
| 3.5 | 380 | V0 | V0 | V0 |
| 3.0 | 340 | V0 | V0 | - |
| 2.5 | 300 | V0 | - | - |
| 2.0 | 380 | V0 | - | - |
| 2.0 | 340 | V0 | | |
| 1.5 | 370 | V0 | | |

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A polyurethane foam comprising:
a base polyol component;
a phosphorous polyol component; and
an expandable graphite,
wherein the polyurethane foam has a V0 rating based on a UL94 flame retardancy test performed at a polyurethane foam thickness of 3.5 mm and a polyurethane foam density of 380 kg/m³
wherein the polyurethane foam further comprises melamine cyanurate,
wherein the content of the melamine cyanurate is at least 4.0 wt.% and not greater than 13.0 wt.% for a total weight of the polyurethane foam.

2. The polyurethane foam of claim 1, wherein the phosphorous polyol component comprises at least one ethylene oxide (EO) terminal.

3. The polyurethane foam of claim 2, wherein phosphorous polyol component comprises an ethylene oxide content of not greater than 30%.

4. The polyurethane foam of claim 1, wherein the phosphorous polyol component comprises an OH number of at least 80 KOH mg/g and not greater than 180 KOH mg/g.

5. The polyurethane foam of claim 1, wherein the polyurethane foam comprises a content of phosphorous polyol component of at least 8 wt.% and not greater than 40 wt.% for a total weight of the polyurethane foam.

6. The polyurethane foam of claim 1, wherein the polyurethane foam comprises a content of expandable graphite of at least 8 wt.% and not greater than 40 wt.% for a total weight of the polyurethane foam.

7. The polyurethane foam of claim 1, wherein the polyurethane foam comprises a content of base polyol component of at least 20 wt.% and not greater than 60 wt.% for a total weight of the polyurethane foam.

8. A method of forming a polyurethane foam of claim 1 comprising:
providing a raw material mixture comprising:
a raw base polyol component;
a raw phosphorous polyol component; and
a raw expandable graphite component, and
forming the raw material mixture into a polyurethane foam,
wherein the polyurethane foam has a V0 rating based on a UL94 flame retardancy test at a polyurethane foam thickness of 3.5 mm and a polyurethane foam density of 380 kg/m³,
wherein the raw material mixture further comprises a raw melamine component and
wherein the raw material mixture comprises a content of the raw melamine component of at least 4.0 wt.% and not greater than 13.0 wt.% for a total weight of the raw material mixture.

9. The method of claim 8, wherein the raw material mixture comprises a content of the raw phosphorous polyol component of at least 8 wt.% and not greater than 40 wt.% for a total weight of the raw material mixture.

10. The method of claim 8, wherein the raw material mixture comprises a content of the raw expandable graphite component of at least 8 wt.% and not greater than 40 wt.% for a total weight of the raw material mixture.

11. The method of claim 8, wherein the raw material mixture comprises a content of the raw base polyol component of at least 20 wt.% and not greater than 60 wt.% for a total weight of the raw material mixture.

12. A battery compression pad comprising a polyurethane foam of claim 1.

## Patentansprüche

1. Polyurethanschaum, umfassend:
eine Basispolyolkomponente;
eine Phosphorpolyolkomponente; und
ein Blähgraphit,
wobei der Polyurethanschaum eine V0-Bewertung basierend auf einem UL94-Flammschutztest aufweist, der bei einer Polyurethanschaumdicke von 3,5 mm und einer Polyurethanschaumdichte von 380 kg/m³ durchgeführt wird,
wobei der Polyurethanschaum ferner Melamincyanurat umfasst,
wobei der Gehalt des Melamincyanurats mindestens 4,0 Gew.-% und nicht mehr als 13,0 Gew.-% für ein Gesamtgewicht des Polyurethanschaums beträgt.

2. Polyurethanschaum nach Anspruch 1, wobei die Phosphorpolyolkomponente mindestens einen Ethylenoxid-Endstand (EO-Endstand) umfasst.

3. Polyurethanschaum nach Anspruch 2, wobei die Phosphorpolyolkomponente einen Ethylenoxidgehalt von nicht mehr als 30 % umfasst.

4. Polyurethanschaum nach Anspruch 1, wobei die Phosphorpolyolkomponente eine OH-Zahl von mindestens 80 KOH mg/g und nicht mehr als 180 KOH mg/g umfasst.

5. Polyurethanschaum nach Anspruch 1, wobei der Polyurethanschaum einen Phosphorpolyolkomponentengehalt von mindestens 8 Gew.-% und nicht mehr als 40 Gew.-% für ein Gesamtgewicht des Polyurethanschaums umfasst.

6. Polyurethanschaum nach Anspruch 1, wobei der Polyurethanschaum einen Blähgraphitgehalt von mindestens 8 Gew.-% und nicht mehr als 40 Gew.-% für ein Gesamtgewicht des Polyurethanschaums umfasst.

7. Polyurethanschaum nach Anspruch 1, wobei der Polyurethanschaum einen Basispolyolkomponentengehalt von mindestens 20 Gew.-% und nicht mehr als 60 Gew.-% für ein Gesamtgewicht des Polyurethanschaums umfasst.

8. Verfahren zum Ausbilden eines Polyurethanschaums nach Anspruch 1, umfassend:
Bereitstellen einer Rohmaterialmischung, umfassend:
eine rohe Basispolyolkomponente;
eine rohe Phosphorpolyolkomponente; und
eine rohe Blähgraphitkomponente, und
Ausbilden der Rohmaterialmischung zu einem Polyurethanschaum,
wobei der Polyurethanschaum eine V0-Bewertung basierend auf einem UL94-Flammschutztest bei einer Polyurethanschaumdicke von 3,5 mm und einer Polyurethanschaumdichte von 380 kg/m³ aufweist,
wobei die Rohmaterialmischung ferner eine Rohmelaminkomponente umfasst und wobei die Rohmaterialmischung einen Gehalt der Rohmelaminkomponente von mindestens 4,0 Gew.-% und nicht mehr als 13,0 Gew.-% für ein Gesamtgewicht der Rohmaterialmischung umfasst.

9. Verfahren nach Anspruch 8, wobei die Rohmaterialmischung einen Gehalt der rohen Phosphorpolyolkomponente von mindestens 8 Gew.-% und nicht mehr als 40 Gew.-% für ein Gesamtgewicht der Rohmaterialmischung umfasst.

10. Verfahren nach Anspruch 8, wobei die Rohmaterialmischung einen Gehalt der rohen Blähgraphitkomponente von mindestens 8 Gew.-% und nicht mehr als 40 Gew.-% für ein Gesamtgewicht der Rohmaterialmischung umfasst.

11. Verfahren nach Anspruch 8, wobei die Rohmaterialmischung einen Gehalt der rohen Basispolyolkomponente von mindestens 20 Gew.-% und nicht mehr als 60 Gew.-% für ein Gesamtgewicht der Rohmaterialmischung umfasst.

12. Batteriekompressionspad, umfassend einen Polyurethanschaum nach Anspruch 1.

## Revendications

1. Mousse de polyuréthane comprenant :
un composant polyol de base ;
un composant polyol phosphoré ; et
un graphite expansible,
dans laquelle la mousse de polyuréthane présente un classement V0 sur la base d'un essai d'ignifugation UL94 effectué à une épaisseur de mousse de polyuréthane de 3,5 mm et une masse volumique de mousse de polyuréthane de 380 kg/m³
dans laquelle la mousse de polyuréthane comprend en outre du cyanurate de mélamine,
dans laquelle la teneur en cyanurate de mélamine est d'au moins 4,0 % en poids et non supérieure à 13,0 % en poids pour un poids total de la mousse de polyuréthane.

2. Mousse de polyuréthane selon la revendication 1, dans laquelle le composant polyol phosphoré comprend au moins un groupe terminal oxyde d'éthylène (EO).

3. Mousse de polyuréthane selon la revendication 2, dans laquelle le composant polyol phosphoré comprend une teneur en oxyde d'éthylène non supérieure à 30 %.

4. Mousse de polyuréthane selon la revendication 1, dans laquelle le composant polyol phosphoré comprend un indice OH d'au moins 80 mg KOH/g et non supérieur à 180 mg KOH/g.

5. Mousse de polyuréthane selon la revendication 1, dans laquelle la mousse de polyuréthane comprend une teneur de composant polyol phosphoreux d'au moins 8 % en poids et pas plus de 40 % en poids pour un poids total de la mousse de polyuréthane.

6. Mousse de polyuréthane selon la revendication 1, dans laquelle la mousse de polyuréthane comprend une teneur de graphite expansible d'au moins 8 % en poids et ne dépassant pas 40 % en poids pour un poids total de la mousse de polyuréthane.

7. Mousse de polyuréthane selon la revendication 1, dans laquelle la mousse de polyuréthane comprend une teneur de composant polyol de base d'au moins 20 % en poids et pas plus de 60 % en poids pour un poids total de la mousse de polyuréthane.

8. Procédé de formation d'une mousse polyuréthane selon la revendication 1, comprenant :
la fourniture d'un mélange de matières premières comprenant :
un composant polyol de base brut ;
un composant polyol phosphoré brut ; et
un composant de graphite expansible brut, et
la formation du mélange de matières premières en une mousse de polyuréthane,
dans lequel la mousse de polyuréthane a un classement V0 sur la base d'un essai d'ignifugation UL94 à une épaisseur de mousse de polyuréthane de 3,5 mm et une densité de mousse de polyuréthane de 380 kg/m³,
dans lequel le mélange de matières premières comprend en outre un composant de mélamine brute et dans lequel le mélange de matières premières comprend une teneur du composant de mélamine brute d'au moins 4,0 % en poids et non supérieure à 13,0 % en poids pour un poids total du mélange de matières premières.

9. Procédé selon la revendication 8, dans lequel le mélange de matières premières comprend une teneur en composant polyol de phosphore brut d'au moins 8 % en poids et d'au plus 40 % en poids pour un poids total du mélange de matières premières.

10. Procédé selon la revendication 8, dans lequel le mélange de matières premières comprend une teneur en composant de graphite expansible brut d'au moins 8 % en poids et non supérieure à 40 % en poids pour un poids total du mélange de matières premières.

11. Procédé selon la revendication 8, dans lequel le mélange de matières premières comprend une teneur du composant polyol de base brut d'au moins 20 % en poids et non supérieure à 60 % en poids pour un poids total du mélange de matières premières.

12. Coussin de compression pour batterie comprenant une mousse de polyuréthane selon la revendication 1.
